Europäisches Patentamt

European Patent Office

Office européen des brevets

(11) Veröffentlichungsnummer: **0 339 194**
**A1**

## (12) EUROPÄISCHE PATENTANMELDUNG

(21) Anmeldenummer: 89102501.7

(22) Anmeldetag: 14.02.89

(51) Int. Cl.⁴: **E03C 1/04 , F16K 11/00**

(30) Priorität: 20.04.88 DE 3813186

(43) Veröffentlichungstag der Anmeldung:
**02.11.89 Patentblatt 89/44**

(84) Benannte Vertragsstaaten:
**AT BE CH DE ES FR GB GR IT LI LU NL**

(71) Anmelder: **SCHEFFER-ARMATUREN FRANZ SCHEFFER oHG**
**Am Vogelsang 31-33**
**D-5750 Menden 1(DE)**

(72) Erfinder: **Scheffer, Paul**
**Oesberner Weg 9 a**
**D-5750 Menden(DE)**

(74) Vertreter: **Fritz, Edmund Lothar, Dipl.-Chem. et al**
**Patentanwaltskanzlei Fritz Mühlenberg 74**
**D-5760 Arnsberg 1(DE)**

(54) **Wandanschlussarmatur für Handbrausen.**

(57) Die Wandanschlußarmatur (Wandanschlußbogen) ist horizontal an einer Unterputzleitung, die zu einem Absperrventil führt, angeschlossen. Das Wasser wird um 90° umgelenkt in einen Hauptkanal zum Anschluß an einer normalen Brause und in einen Nebenkanal (17),wo eine Schwallbrause angeschlossen werden kann. Mit einer Umstellvorrichtung (20) kann wahlweise auf den Hauptkanal (14) oder den Nebenkanal (17) umgestellt werden. Wenn das Wasser abgesperrt wird, erfolgt automatisch eine Umstellung auf den Hauptkanal (14).

Fig. 1

EP 0 339 194 A1

## Wandanschlußarmatur für Handbrausen

Die Erfindung bezieht sich auf eine Wandanschlußarmatur für Handbrausen mit den Merkmalen nach dem Oberbegriff des Hauptanspruchs.

Wandanschlußarmaturen dieser Art, auch Wandanschlußbogen genannt, werden an der Wand von Duschkabinen installiert und in der Wand an die Rohrleitungen angeschlossen, die von einer Unterputzmisch- und Absperrarmatur kommen. In einer solchen Wandanschlußarmatur wird das in horizontaler Richtung ankommende Wasser in einem Winkel von 90° nach unten umgelenkt, aus einem unten am Armaturkörper vorstehenden Stutzen, woran der Schlauch einer Handbrause angeschlossen werden kann.

Die Aufgabe der Erfindung besteht darin, eine Armatur der obengenannten Art so einzurichten, daß wahlweise verschiedene Brausen beschickt werden können.

Diese Aufgabe wird durch eine Wandanschlußarmatur mit den Merkmalen des kennzeichnenden Teils des Hauptanspruchs gelöst. Die Unteransprüche haben bevorzugte konstruktive Ausgestaltungen zum Inhalt.

Wenn eine Wandanschlußarmatur nach der Erfindung installiert ist, dann besteht die Möglichkeit, außer einer normalen Brause auch den Schlauch einer weiteren Brause unten am Gehäuse anzuschließen, denn es ist außer dem Hauptkanal noch ein Nebenkanal für den Durchfluß des Wassers vorgesehen. Die zusätzliche Brause kann beispielsweise eine sogenannte Schwallbrause sein. Mit Hilfe einer Umstellvorrichtung kann wahlweise das Wasser zu dem einen oder zu dem anderen Kanal geleitet werden. Der zusätzliche Kanal kann auch zum Anschluß einer Leitung genutzt werden, der zum Füllen eines Gefäßes dient.

Gegenstand der Erfindung ist weiterhin eine bevorzugte konstruktive Ausbildung einer Umstellvorrichtung mit Knopfbedienung. Dabei kann gemäß der weiteren Erfindung diese spezielle Umstellvorrichtung so ausgebildet werden, daß sie bei Ausbleiben des Wasserdruckes automatisch in eine Normalstellung geführt wird, die beim Wiederanstellen des Wassers die Zuführung desselben zum Hauptkanal gewährleistet. Im folgenden wird ein Ausführungsbeispiel der Erfindung näher beschrieben unter Bezugnahme auf die beiliegenden Zeichnungen.

Fig. 1 ist eine Seitenansicht eines Gehäuses einer Wandanschlußarmatur nach der Erfindung ohne Umstellvorrichtung, im mittleren Bereich ist die Darstellung lotrecht geschnitten;

Fig. 2 ist eine Ansicht des Gehäuses gemäß Fig. 1 von unten gesehen, in Richtung des Pfeiles II;

Fig. 3 ist eine Ansicht des Gehäuses gleichfalls ohne Umstellvorrichtung in Richtung des Pfeiles III von Fig. 1;

Fig. 4 stellt die komplette Wandanschlußarmatur dar gemäß einem Schnitt VI-VI von Fig. 1, wobei der Knopf der Umstellvorrichtung eingedrückt ist (Normalstellung);

Fig. 5 zeigt einen Schnitt wie Fig. 4, jedoch bei ausgezogenem Knopf der Umstellvorrichtung.

Die Wandanschlußarmatur nach der Erfindung hat ein massives Gehäuse 10 aus Metall, an dem eine ebene, in der Draufsicht kreisrunde, Fläche 11 gebildet ist, geeignet zur Anlage an der Gebäudewand, nach Art einer Rosette ausgebildet. Zentrisch steht an der Fläche 11 ein Zulaufstutzen 12 vor, der in eine Durchbrechung des Putzes der Gebäudewand hineinragt und dort an die Unterputzrohre angeschlossen ist. Dem Zulauf 12 wird das Wasser von einer nicht dargestellten Unterputzmisch-und Absperrarmatur zugeführt.

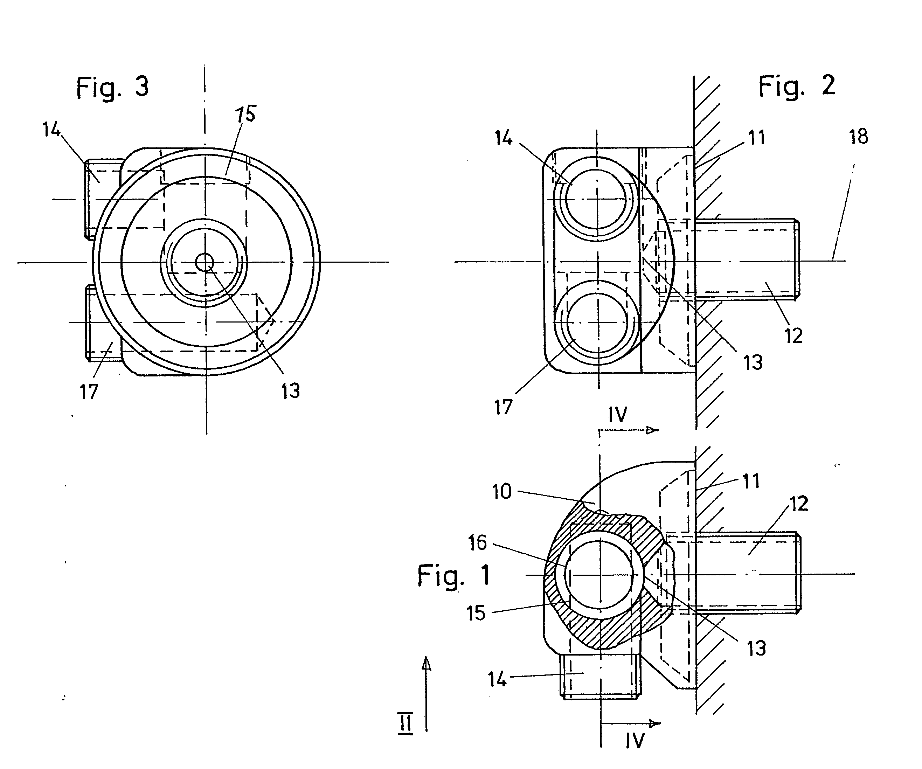

Im Gehäuse sind weiter zwei lotrechte Kanäle gebildet, die in der Draufsicht (siehe Fig. 2) symmetrisch zu einer lotrechten Mittelebene 18 angeordnet sind, deren Lage durch die Achse des Zulaufes 12 bestimmt ist. Bei den beiden Kanälen handelt es sich um einen Hauptkanal 14, an den unten eine normale Brause angeschlossen werden kann und um einen Nebenkanal 17, an den der Schlauch einer weiteren Brause z. B. einer sogenannten Schwallbrause angeschlossen werden kann. Der Nebenkanal kann aber auch für eine Leitung zum Füllen von Gefäßen genutzt werden. Die beiden Kanäle sind jeweils in Gestalt von vorstehenden Stutzen weitergeführt.

Weiterhin ist am Gehäuse eine Querbohrung 15 gebildet, die horizontal von der Gehäuseseite, an dem sich der Hauptkanal 14 befindet ausgeht, diesen Hauptkanal kreuzt und in den Nebenkanal 17 mündet. Symmetrisch zur Mittelebene 18 ist diese Querbohrung mit dem Zulauf 12 über eine Trichteröffnung 13 verbunden.

Die Querbohrung 15 dient zur Aufnahme einer Umstellvorrichtung 20, bestehend aus einem Zylinder 25, der in ein Innengewinde der Querbohrung eingeschraubt ist, und aus einer Büchse 27, die achsparallel über Stege 26 mit dem Zylinder 25 fest verbunden ist und die in Strömungsrichtung vor dem Hauptkanal 14 in der Querbohrung 15 liegt und mittels eines Dichtungsringes 28 gegenüber der Bohrungswand abgedichtet ist. Zur Umstellvorrichtung gehört weiterhin eine axiale Schubstange 22. Am Ende dieser Stange ist ein Doppelkegel 23 angebracht. Die Stange ist axial verschiebbar im Zylinder 25 geführt, außen ist an der Stange ein Knopf 21 befestigt, mit dem die Stange verschoben werden kann.

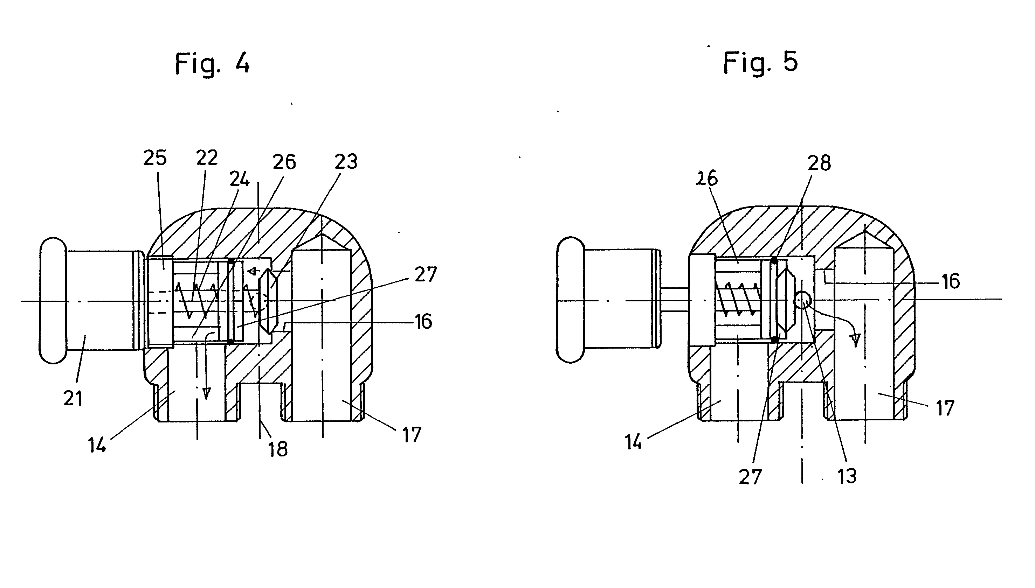

Wenn der Knopf 21 eingedrückt ist, dann liegt der Doppelkegel an einem angeformten Sitz 16, der den Übergang des Wasserstroms vor der Trichteröffnung 13 in den Nebenkanal 17 bildet. In dieser Stellung ist somit dieser Durchgang gesperrt. Das Wasser kann indessen von der Trichteröffnung 13 nach links durch die Büchse 27 in den Hauptkanal 14 fließen. Der Doppelkegel 13 wird in der Stellung nach Fig. 4 (Normalstellung) einmal durch den Wasserdruck am Sitz gehalten und darüberhinaus durch den Druck einer, die Schubstange 22 umgebenden Schraubenfeder 24. Auf Fig. 4 erkennt man, daß der Doppelkegel 23 rechts von der lotrechten Mittelebene 18 entsteht.

Die Umstellung auf den Durchfluß durch den Nebenkanal 17 erfolgt durch Herausziehen des Knopfes 21 in die Stellung nach Fig. 5. Dabei wird der Sitz 16 frei, der Doppelkegel 23 wird auf die linke Seite der Trichteröffnung 13 geschoben und er legt sich auf die Büchse 27, an der ein entsprechender Sitz für den Doppelkegel gebildet ist. Da somit der Durchfluß durch den Sitz gesperrt ist und im übrigen auch der Durchfluß um die Büchse 27 herum durch den Dichtungsring 28 gesperrt ist, vermag bei der Stellung nach Fig. 5 kein Wasser in den Hauptkanal 14 zu fließen. Beim Durchfluß des Wassers von der Trichteröffnung 13 in den Nebenkanal 17 wird im übrigen der Doppelkegel auch durch den Wasserdruck an dem Sitz der Büchse gehalten. Wird die Absperrarmatur (nicht dargestellt) geschlossen, so ist kein Wasserdruck mehr vorhanden, der auf den Doppelkegel wirken könnte, so daß dieser durch den Federdruck von Sitz 27 abgehoben und gegen den angeformten Sitz 16 gedrückt wird. D. h., daß bei Absperren des Wassers die Umstellvorrichtung automatisch in die Normalstellung geführt wird, so daß das Wasser wieder in den Hauptkanal 14 gelangt, wenn die Absperrarmatur wieder geöffnet wird.

## Ansprüche

1. Wandanschlußarmatur für Handbrausen mit einem Gehäuse, an dem eine wandseitige Anlagefläche gebildet ist, von der ein Zulaufstutzen ausgeht, und an dem weiterhin ein nach unten gerichteter Ablaufstutzen zum Anschließen eines Brauseschlauches gebildet ist, gekennzeichnet durch die nachfolgend genannten Merkmale:
- Am Gehäuse (10) sind zwei Ablaufstutzen gebildet, in der Draufsicht symmetrisch zu einer lotrechten durch die Zulaufachse bestimmten Ebene, und zwar ein Hauptkanal (14) und ein Nebenkanal (17);
- von der Seite, wo der Hauptkanal (14) liegt, geht von der Gehäusewand eine Querbohrung (15) aus, welche den Hauptkanal schneidet, in dem Nebenkanal (17) mündet, und die vom Zulauf (12) aus eine Verbindung über eine Trichteröffnung (13) hat;
- die Querbohrung (15) nimmt eine Umstellvorrichtung (20) zur wahlweisen Führung des Wassers, entweder in den Hauptkanal oder in den Nebenkanal auf.

2. Wandanschlußarmatur nach Anspruch 1, gekennzeichnet durch die nachfolgend genannten Merkmale:
- Die Umstellvorrichtung (20) weist einen Doppelkegel (23) auf, der mittels einer axialverschiebbaren Stange (22) in eine Position seitlich der Mittelebene (18) einstellbar ist, wo er auf einem angeformten Sitz (16) aufsitzt, der zum Nebenkanal (17) führt;
- der Doppelkegel ist durch Verschieben der Stange auf die andere Seite der Mittelebene einstellbar, wo er auf einer Büchse (27) aufsitzt, die den Übergang des Wasserstromes zum Hauptkanal (14) darstellt;
- die Büchse (27) ist über achsparallele Stege (26) mit einem in das Gehäuse eingeschraubten Zylinder (25) verbunden;
- zur Betätigung der Stange (22), die im Zylinder (25) geführt ist, ist außen ein Knopf (21) befestigt.

3. Wandanschlußarmatur nach Anspruch, 2 dadurch gekennzeichnet, daß die Stange von einer Schraubenfeder (24) umgeben ist, die bei Abstützung am Zylinder (25) den Doppelkegel am angeformten Sitz (16) hält, wenn kein Wasserdruck herrscht.

Fig. 3

Fig. 2

Fig. 1

EP 0 339 194 A1

Fig. 5

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 292 168 (ROBINETTERIE CHANTOISEAU) * Seiten 2-4; Figur * --- | 1,3 | E 03 C 1/04 F 16 K 11/00 |
| A | US-A-4 051 862 (H.M. HAYTAYAN) * Figuren 1,2; Spalte 3, Zeilen 3-13 * --- | 2 | |
| A | US-A-4 286 623 (M. SPANIDES) ----- | | |

RECHERCHIERTE SACHGEBIETE (Int. Cl.4)

E 03 C
F 16 K

Der vorliegende Recherchenbericht wurde für alle Patentansprüche erstellt

| Recherchenort | Abschlußdatum der Recherche | Prüfer |
|---|---|---|
| DEN HAAG | 13-06-1989 | BIRD,C.J. |